# EUROPÄISCHE PATENTSCHRIFT

(11) **EP 1 841 609 B1**
(45) Veröffentlichungstag und Bekanntmachung des Hinweises auf die Patenterteilung: **27.04.2011**
(21) Anmeldenummer: 05812259.9
(22) Anmeldetag: 02.12.2005
(51) Int. Cl.: B60H 1/00

(54) **VERFAHREN ZUM ERMITTELN DER SOLL-AUSBLASTEMPERATUR EINER AUTOMATISCHEN KLIMAANLAGE IN EINEM CABRIO**
METHOD FOR DETERMINING THE DESIRED VENTILATION AIR TEMPERATURE OF AN AUTOMATIC AIR-CONDITIONING SYSTEM IN A CONVERTIBLE
PROCEDE POUR DETERMINER LA TEMPERATURE DE PURGE THEORIQUE D'UN SYSTEME DE CLIMATISATION AUTOMATIQUE DANS UN CABRIOLET

(30) Priorität: 22.01.2005 DE 102005003086
(43) Veröffentlichungstag der Anmeldung: 10.10.2007
(73) Patentinhaber: Bayerische Motoren Werke Aktiengesellschaft, 80809 München (DE)
(72) Erfinder: HEIL, Michael, 85661 Forstinning (DE); SALZBERGER, Robert, 81927 München (DE)
(86) Internationale Anmeldenummer: PCT/EP2005/012932
(87) Internationale Veröffentlichungsnummer: WO 2006/076945

(56) Entgegenhaltungen:
- DE-A1- 10 226 008
- DE-A1- 10 235 580
- US-A1- 2001 045 278

## Beschreibung

Die Erfindung bezieht sich auf ein Verfahren zum Ermitteln der Soll-Ausblastemperatur einer automatischen Heiz-Klimaanlage eines Fahrzeugs, vorzugsweise eines Cabrios, nach dem Oberbegriff des Patentanspruchs 1.

Ein derartiges Verfahren ist beispielsweise aus der DE 102 35 580 A1 bekannt.

Heutzutage sind viele Fahrzeuge mit einer Heiz-Klimaanlage ausgestattet. Dies ermöglicht den Insassen bei geschlossenen Fahrzeugen ein optimales Heizen oder Klimatisieren des Fahrzeuginnenraums nach ihren Bedürfnissen. Handelt es sich bei der Heiz-Klimaanlage um eine automatisch gesteuerte Heiz-Klimaanlage, werden alle Vorgänge der Heiz-Klimaanlage abhängig von den Einstellungen der Fahrzeuginsassen automatisch vorgenommen. Bei zu öffnenden Fahrzeugen, z. B. Cabrios, erfolgt die automatische Steuerung bzw. Regelung bei offenem Verdeck meist auf die selbe Weise wie bei geschlossenem Verdeck. Dies hat zur Folge, dass die Fahrzeuginsassen die automatische Heiz-Klimaanlage abschalten, da sie nicht automatisch auf die neuen Bedürfnisse der Fahrzeuginsassen reagiert.

Aus der DE 197 47 326 A1 ist eine automatische Klimaanlage bekannt, die sich automatisch bei geöffnetem Faltdach abschaltet. Die Fahrzeuginsassen könnten die Einstellung zwar manuell vornehmen, dies bedeutet allerdings aufgrund der sich ständig ändernden Randbedingungen, wie bspw. der Lichtintensität, einen sehr hohen Bedienaufwand.

Die DE 38 43 898 C2 beschreibt ein Verfahren zur Steuerung eines Heizungssystems für Fahrzeuge mit zu öffnenden und schließenden Verdecken. Bei geschlossenem Verdeck wird eine Innenraumtemperaturregelung zum Einstellen der Temperaturmischklappen in Abhängigkeit als Funktion von Innenraumtemperatur, Solltemperatur und Ausblastemperatur vorgenommen. Bei offenem Verdeck wird auf eine Ausblastemperatur-Steuerung umgeschaltet, bei der die Temperaturmischschlappe nur in Abhängigkeit von der Solltemperatur und der Ausblastemperatur eingestellt wird. Hierbei hat der Temperaturinnenraumfühler keinen Einfluss mehr auf die Steuerung.

Weiter ist aus der US 2001 /0045278 A1 eine automatische Klimaanlage für ein Fahrzeug bekannt, bei der die Gebläseleistung bei offenem Verdeck um einem geschwindigkeitsabhängigen Offsetwert erhöht wird. In einer besonderen Ausgestaltung der Klimaanlage wird die Gebläseleistung bei offenem Verdeck nur dann um den geschwindigkeitsabhängigen Offsetwert erhöht, wenn die Außentemperatur innerhalb eines vorgegebenen Außentemperaturbereichs liegt.

Aufgabe der Erfindung ist es, die Steuerung und/oder Regelung einer Heiz-Klimaanlage für Fahrzeuge mit einem zu öffnenden und schließenden Verdeck im Hinblick auf die Bedürfnisse der Fahrzeuginsassen weiter zu verbessern.

Diese Aufgabe wird erfindungsgemäß durch ein Verfahren nach Patentanspruch 1 gelöst. Vorteilhafte Weiterbildungen sind die Gegenstände der abhängigen Ansprüche.

Das erfindungsgemäße Verfahren zum Ermitteln der Soll-Ausblastemperatur einer automatischen Heiz-Klimaanlage eines Fahrzeugs, vorzugsweise eines Cabrios, wobei ein geöffneter oder geschlossener Zustand des Verdecks des Fahrzeugs erfasst wird und die Heiz-Klimaanlage abhängig vom Zustand des Verdecks unterschiedlich gesteuert und/oder geregelt wird, zeichnet sich dadurch aus, dass beim geöffneten Zustand des Verdecks die Soll-Ausblastemperatur an den Belüftungsklappen in Abhängigkeit von der Fahrzeuggeschwindigkeit und der Außentemperatur ermittelt wird. Die hier als Verdeck bezeichnete Fahrzeugöffnung kann sowohl das Verdeck eines Cabrios, ein Panoramascheibendach, als auch ein Faltdach sein.

Bei der Soll-Ausblastemperatur der automatischen Heiz-Klimaanlage ist vorzugsweise die Soll-Ausblastemperatur an den Belüftungsklappen der Heiz-Klimaanlage gemeint. Die Belüftungsklappen, die Teil einer Luftverteilungsvorrichtung im Fahrzeug sind, sind über den Fußraumklappen angeordnet und dienen zur optimalen Temperierung der Fahrzeuginsassen im oberen Körperbereich. Ein Fahrzeuginsasse, der in einem Fahrzeug sitzt, dessen Verdeck offen ist, nimmt aufgrund der geänderten Umgebungssituation im Vergleich zu einem geschlossenen Fahrzeug andere bzw. mehr Einflussgrößen, wie z. B. den Fahrtwind, wahr. Aus diesem Grund wird der Zustand des Fahrzeugverdecks detektiert und abhängig vom Zustand des Verdecks automatisch eine derart unterschiedliche Temperatursteuerung und/oder -regelung vorgenommen, so dass der Fahrzeuginsasse eine auf die neue Umgebungssituation angepasste und für ihn angenehme Temperierung des Fahrzeuginnenraums erhält. Da bei offenem Verdeck die Fahrzeuggeschwindigkeit eine wesentliche Rolle im Hinblick auf das Temperaturempfinden der Fahrzeuginsassen nimmt, wird erfindungsgemäß bei offenem Verdeck die Soll-Ausblastemperatur in Abhängigkeit von der Fahrzeuggeschwindigkeit unterschiedlich vorgegeben bzw. gesteuert.

Erfindungsgemäß wird beim geöffneten Zustand des Verdecks die Soll-Ausblastemperatur derart ermittelt, dass die verdeck-geschlossene Soll-Ausblastemperatur, insbesondere die Soll-Ausblastemperatur an den Belüftungsklappen, um einen geschwindigkeitsabhängigen Offsetwert erhöht wird. Dadurch werden die bei offenem Verdeck auftretenden Energieverluste, die mit steigender Geschwindigkeit des Fahrzeugs zunehmen, durch eine Erhöhung der Soll-Ausblastemperatur kompensiert. Anstelle der Aufschaltung des Offsetwertes kann die Soll-Ausblastemperatur bei offenem Verdeck auch durch eine Kennlinie oder eine im Steuergerät hinterlegte Berechnungsroutine ermittelt werden.

Da die Energieverluste bei geringen Geschwindigkeiten relativ gering sind, ist bei geöffnetem Verdeck und bei einer Geschwindigkeit, die einen vorgegebenen ersten Geschwindigkeitsgrenzwert unterschreitet, der geschwindigkeitsabhängige Offsetwert vorteilhafterweise in etwa Null. Somit entspricht die Soll-Ausblastemperatur bei geöffnetem Verdeck und bei geringen Geschwindigkeiten des Fahrzeugs durch Null-Setzen des Offsetwertes der Soll-Ausblastemperatur bei geschlossenem Verdeck.

Vorteilhafterweise wird beim geöffneten Zustand des Verdecks und einer Geschwindigkeit, die zwischen einem vorgegebenen ersten Geschwindigkeitsgrenzwert und einem vorgegebenen zweiten Geschwindigkeitsgrenzwert liegt, wobei der vorgegebene erste Geschwindigkeitsgrenzwert kleiner als der vorgegebene zweite Geschwindigkeitsgrenzwert ist, der geschwindigkeitsabhängige Offsetwert gemäß einer Rampe mit einer konstanten Steigung von Null bis zu einem maximalen Offsetgrenzwert vergrößert.

Da die Energieverluste bei sehr hohen Geschwindigkeiten in etwa konstant bleiben, kann bei geöffnetem Verdeck und bei einer Geschwindigkeit, die einen vorgegebenen zweiten Geschwindigkeitsgrenzwert überschreitet, der geschwindigkeitsabhängige Offsetwert vorteilhafterweise einen vorgegebenen konstanten Offsetgrenzwert einnehmen.

Zusätzlich kann bei geöffnetem Verdeck in Abhängigkeit von der Außentemperatur eine unterschiedliche Soll-Ausblastemperatur vorgegeben werden. Die Soll-Ausblastemperatur kann vorteilhafterweise derart ermittelt werden, dass bei offenem Verdeck die verdeck-geschlossene Soll-Ausblastemperatur um einen geschwindigkeits- und außentemperaturabhängige Offsetwert erhöht wird, wobei der geschwindigkeits- und außentemperaturabhängigen Offsetwert das Produkt aus einem geschwindigkeitsabhängigen Offsetwert und einem Außentemperaturfaktor ist.

So wird vorteilhafterweise bei sehr hohen Außentemperaturen durch Null-Setzen des Außentemperaturfaktors keine Beaufschlagung der Soll-Ausblastemperatur mit einem geschwindigkeitsabhängigen Offsetwert vorgenommen werden, da bei diesen Temperaturbereichen die Soll-Ausblastemperatur in der Regel bereits ausreichend hoch vorgegebenen wird. Anstelle des Null-Setzens des Außentemperaturfaktors kann dieser auch einen negativen Wert annehmen, wodurch die Soll-Ausblastemperatur bei offenem Verdecks kleiner wird als bei geschlossenem Verdeck.

Bei einer Außentemperatur, die zwischen einem vorgegebenen ersten Außentemperaturgrenzwert und einem vorgegebenen zweiten Außentemperaturgrenzwert liegt, wobei der erste Außentemperaturgrenzwert kleiner als der zweite Außentemperaturgrenzwert ist, wird der geschwindigkeitsabhängige Offsetwert vorteilhafterweise mit einem Außentemperaturfaktor multipliziert, der gemäß einer Rampe von dem ersten vorgegebenen Außentemperaturgrenzwert bis zum zweiten vorgegebenen Außentemperaturgrenzwert größer wird. Der Außentemperaturfaktor hat vorzugsweise einen Wert zwischen Null und Eins. Somit wird die Soll-Ausblastemperatur bei geöffnetem Verdeck um einen geschwindigkeits- und außentemperaturabhängigen Offsetwert erhöht, der einen Wert von Null bis zu einem Wert, der dem geschwindigkeitsabhängigen Offsetwert ohne Berücksichtigung der Außentemperatur entspricht, annehmen kann.

Vorteilhafterweise kann die Position der Fensterscheiben und/oder eines Windschotts des Fahrzeugs erfasst werden und Soll-Ausblastemperatur zusätzlich abhängig von der Position der Fensterscheiben und/oder des Windschotts gesteuert werden. Wie bereits erwähnt, reagiert ein Fahrzeuginsasse bei offenem Verdeck auf die Umgebungssituation (Temperatur, Sonneneinstrahlung, Windverhältnisse, Gebläse) viel intensiver, als bei einem geschlossenen Fahrzeug bzw. einem Cabrio mit einem geschlossenen Verdeck. Die Position der Fensterscheiben und/oder des Windschotts können auf Grund der Luftströmungen auf das Empfinden des Fahrzeuginsassen ebenfalls eine Rolle spielen, wodurch es vorteilhaft ist, die Positionen der Fensterscheiben und/oder des Windschotts zu detektieren und die Steuerung der Heizklimaanlage vor allem im Hinblick auf die Steuerung und/oder Regelung zum Vorgeben der Soll-Ausblastemperatur, insbesondere der Soll-Ausblastemperatur an den Belüftungsklappen, darauf abzustimmen.

Weitere Einzelheiten der Erfindung ergeben sich aus der nachstehenden, ausführlichen Beschreibung und der beigefügten Zeichnung. In der Zeichnung zeigt
- Fig. 1: ein vereinfachtes Ablaufdiagramm zur Berechnung der Soll- Ausblastemperatur,
- Fig. 2: eine Kennlinie zur Ermittlung des geschwindigkeitsabhängigen Offsetwerts und
- Fig. 3: eine Kennlinie zur Ermittlung des Außentemperaturfaktors.

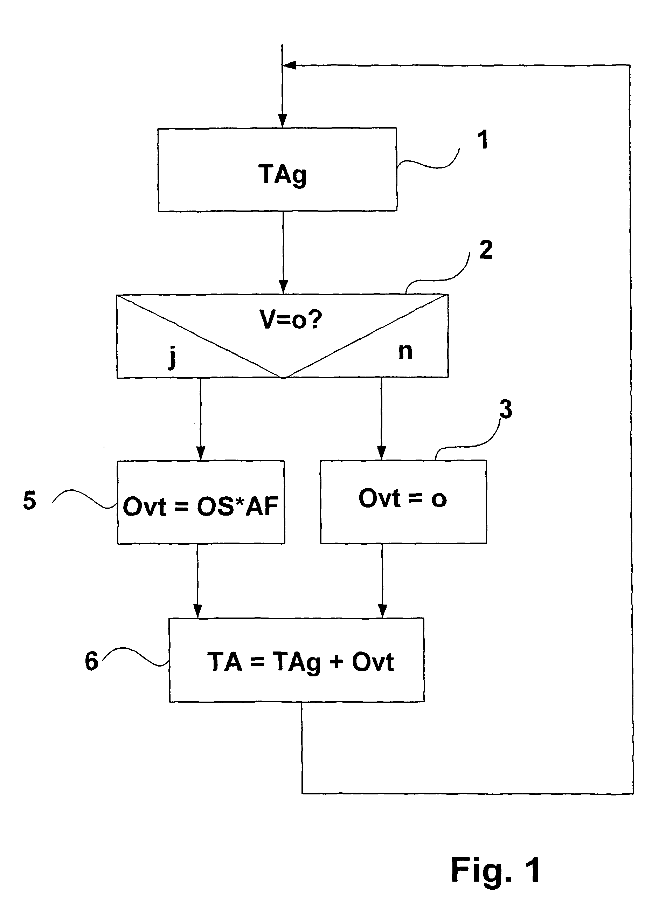

In der Fig. 1 ist ein vereinfachter Verfahrensablauf zur Berechnung der Soll-Ausblastemperatur TA einer automatischen Heiz-Klimaanlage eines Fahrzeugs mit einem zu öffnenden Verdeck dargestellt. Bei der hier berechneten Soll-Ausblastemperatur kann es sich in einer besonders vorteilhaften Ausgestaltung um die Soll-Ausblastemperatur an den Belüftungsklappen der automatischen Heiz-Klimaanlage handeln. In einem ersten Schritt 1 wird die Soll-Ausblastemperatur TAg bei geschlossenem Verdeck, dass das Verdeck des Fahrzeugs geschlossen ist, ermittelt. Die Ermittlung der Soll-Ausblastemperatur TAg für ein geschlossenes Verdeck wird nach einem allgemein bekannten Verfahren in Abhängigkeit von verschiedenen Messgrößen und Betriebsparametern ermittelt. In der Regel handelt es sich hierbei beispielsweise um die Innentemperatur des Fahrzeugs und die vom Fahrer vorgegebene Soll-Temperatur.

In einem zweiten Schritt 2 wird die Stellung des Verdecks über die Abfrage V=o? ermittelt. Die Stellung des Verdecks kann beispielsweise durch einen Endlagenschalter oder anhand einer Auswertung verschiedener Messgrößen und/oder Betriebsparameter ermittelt werden.

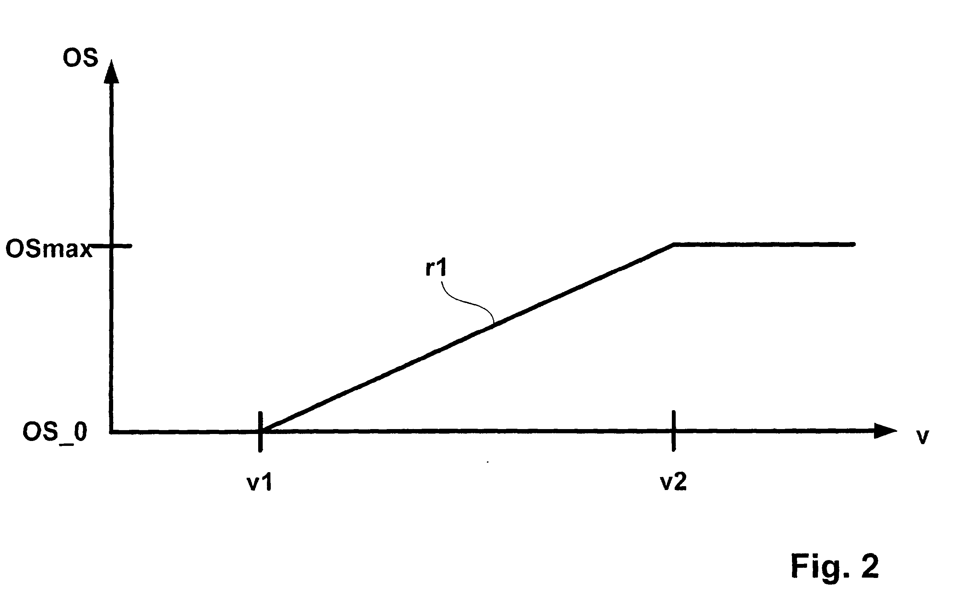

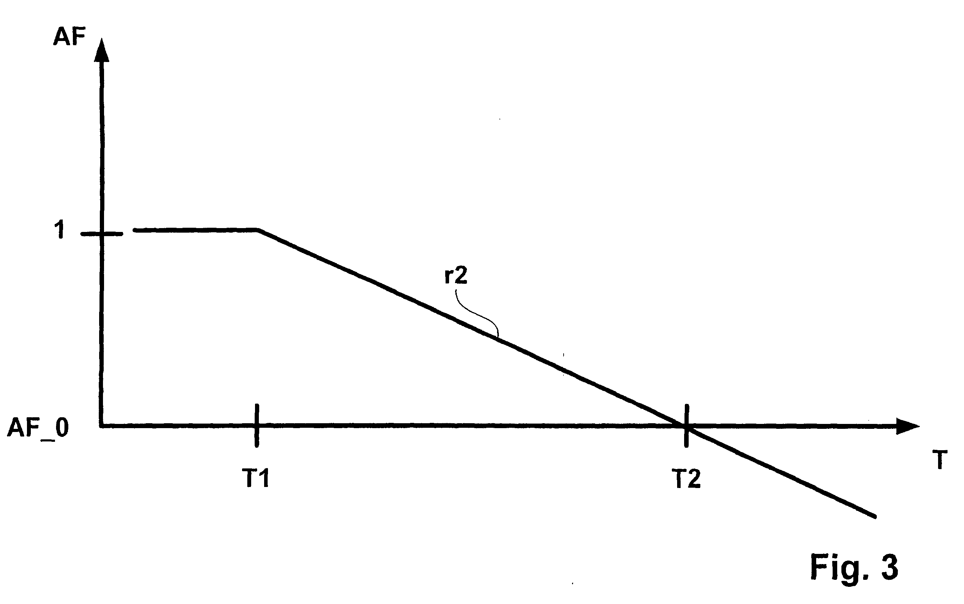

Ist das Verdeck des Fahrzeugs offen, also (V=o)=j, wird in einem Schritt 5 ein geschwindigkeits- und außentemperaturabhängiger Offsetwert Ovt durch multiplizieren des geschwindigkeitsabhängigen Offsetwertes OS mit einem Außentemperaturfaktor AF ermittelt. Der geschwindigkeitsabhängige Offsetwert OS und der Außentemperaturfaktor AF können beispielsweise jeweils aus einer im Steuergerät der Heiz-Klimaanlage abgelegten Kennlinie oder aus einem Kennfeld ermittelt werden. Bevorzugte Kennlinien zur Ermittlung des geschwindigkeitsabhängigen Offsetwertes OS bzw. des Außentemperaturfaktors AF sind in den Fig. 2 und 3 dargestellt. Anschließend wird in einem nächsten Schritt 6 die Soll-Ausblastemperatur TA durch Addition der zuvor im Schritt 1 ermittelten Soll-Ausblastemperatur TAg bei geschlossenem Verdeck mit dem geschwindigkeits- und außentemperaturabhängigen Offsetwert Ovt ermittelt. Nach dem Schritt 6 wird wieder zum Schritt 1 zurückgesprungen und die Ermittlung der Soll-Ausblastemperatur TA startet von vorne.

Ist das Verdeck geschlossen, also (V=o)=n, wird ausgehend vom Schritt 2 in einem nächsten Schritt 3 ein möglicherweise zuvor ermittelter geschwindigkeits- und außentemperaturabhängiger Offsetwert Ovt auf Null gesetzt. Anschließend wird im nächsten Schritt 6 wiederum die Soll-Ausblastemperatur TA durch Addition der zuvor im Schritt 1 ermittelten Soll-Ausblastemperatur TAg bei geschlossenem Verdeck mit dem geschwindigkeits- und außentemperaturabhängigen Offsetwert Ovt ermittelt. Da der geschwindigkeits- und außentemperaturabhängiger Offsetwert Ovt auf Null gesetzt wurde, entsprich die Soll-Ausblastemperatur TA bei offenem Verdeck der Soll-Ausblastemperatur TAg bei geschlossenem Verdeck.

In der Figur 2 ist eine Kennlinie zur Ermittlung des geschwindigkeitsabhängigen Offsetwerts OS in Abhängigkeit von der Fahrzeuggeschwindigkeit v dargestellt. Solange die Geschwindigkeit v des Fahrzeugs einen vorgegebenen ersten Geschwindigkeitsgrenzwert v1, der vorteilhafterweise bei 100 km/h liegt, unterschreitet, hat der geschwindigkeitsabhängige Offsetwert OS einen Wert von Null, also OS_0. Ist die Geschwindigkeit v des Fahrzeugs größer als der vorgegebene erste Geschwindigkeitsgrenzwert v1 und kleiner als ein vorgegebener zweiter Geschwindigkeitsgrenzwert v2, der vorteilhafterweise bei 180 km/h liegt und somit größer ist als der erste Geschwindigkeitsgrenzwert v1 ist, steigt der geschwindigkeitsabhängige Offsetwert OS stetig gemäß einer Rampe r1 von Null OS_0 an. Bei dem vorgegebenen zweiten Geschwindigkeitsgrenzwert v2 hat der geschwindigkeitsabhängige Offsetwert OS einen maximalen Offsetgrenzwert OSmax erreicht. Steigt nun die Geschwindigkeit v des Fahrzeugs weiter über den vorgegebenen zweiten Geschwindigkeitsgrenzwert v2 an, behält der geschwindigkeitsabhängige Offsetwert OS weiterhin den maximalen Offsetgrenzwert OSmax.

Nimmt die Geschwindigkeit v des Fahrzeugs wieder ab, reduziert sich der geschwindigkeitsabhängige Offsetwert OS gemäß der Kennlinie in Fig. 2 mit einer gewissen Verzögerung. Vorteilhafterweise handelt es sich bei der Verzögerung um etwa 2 Sekunden. Die Verzögerung der Anpassung des geschwindigkeitsabhängigen Offsetwertes kann bspw. mittels eines Tiefpasses im Steuergerät realisiert werden.

In der Figur 3 ist eine Kennlinie zur Ermittlung des Außentemperaturfaktors AF in Abhängigkeit von der Außentemperatur T dargestellt. Solange die Außentemperatur T einen vorgegebenen ersten Außentemperaturgrenzwert T1, der vorteilhafterweise bei 15 °C liegt, unterschreitet, hat der Außentemperaturfaktor AF einen Wert von 1. Somit ergibt sich eine Soll-Ausblastemperatur TA, die der Summe aus der Soll-Ausblastemperatur TAg bei geschlossenem Verdeck und dem geschwindigkeitsabhängigen Offsetwert OS entspricht. Ist die Außentemperatur T größer als der vorgegebene erste Außentemperaturgrenzwert T1 und kleiner als ein vorgegebener zweiter Außentemperaturgrenzwert T2, der vorteilhafterweise bei 25 °C liegt und somit größer ist als der erste Außentemperaturgrenzwert T1 ist, fällt der Außentemperaturfaktor AF stetig gemäß einer Rampe r2 von Eins 1 bis Null AF_0.

## Patentansprüche

1. Verfahren zum Ermitteln der Soll-Ausblastemperatur einer automatischen Heiz-Klimaanlage eines Fahrzeugs, vorzugsweise eines Cabrios, wobei ein geöffneter oder geschlossener Zustand des Verdecks des Fahrzeugs erfasst wird und die Heiz-Klimaanlage abhängig vom Zustand des Verdecks unterschiedlich gesteuert und/oder geregelt wird, und wobei beim geöffneten Zustand des Verdecks die Soll-Ausblastemperatur (TA) in Abhängigkeit von der Fahrzeuggeschwindigkeit (v) ermittelt wird, **dadurch gekennzeichnet, dass** beim geöffneten Zustand des Verdecks die Soll-Ausblastemperatur (TA) derart ermittelt wird, dass eine verdeck-geschlossene Soll-Ausblastemperatur (TAg) um einen geschwindigkeits- und außentemperaturabhängigen Offsetwert (TAo) erhöht wird, und wobei der geschwindigkeits- und außentemperaturabhängige Offsetwert (TAo) das Produkt aus einem geschwindigkeitsabhängigen Offsetwert (OS) und einem Außentemperaturfaktor (AF) ist.

2. Verfahren nach Patentanspruch 1, **dadurch gekennzeichnet, dass** beim geöffneten Zustand des Verdecks und bei einer Geschwindigkeit (v), die einen vorgegebenen ersten Geschwindigkeitsgrenzwert (v1) unterschreitet, der geschwindigkeitsabhängige Offsetwert (OS) Null (OS-0) ist.

3. Verfahren nach Patentanspruch 1 oder 2, **dadurch gekennzeichnet, dass** beim geöffneten Zustand des Verdecks und bei einer Geschwindigkeit (v), die zwischen einem vorgegebenen ersten Geschwindigkeitsgrenzwert (v1) und einem vorgegebenen zweiten Geschwindigkeitsgrenzwert (v2) liegt, wobei der vorgegebene erste Geschwindigkeitsgrenzwert (v1) kleiner als der vorgegebene zweite Geschwindigkeitsgrenzwert (v2) ist, der geschwindigkeitsabhängige Offsetwert (OS) gemäß einer Rampe (r1) von Null (OS_0) bis zu einem maximalen Offsetgrenzwert (OSmax) vergrößert wird.

4. Verfahren nach einem der Patentansprüche 1 bis 3, **dadurch gekennzeichnet, dass** beim geöffneten Zustand des Verdecks und bei einer Geschwindigkeit (v), die einen vorgegebenen zweiten Geschwindigkeitsgrenzwert (v2) überschreitet, der geschwindigkeitsabhängige Offsetwert (OS) ein fest vorgegebener Offsetgrenzwert (OSmax) ist.

5. Verfahren nach einem der vorangegangenen Patentansprüche, **dadurch gekennzeichnet, dass** beim geöffneten Zustand des Verdecks und bei einer Außentemperatur (T), die einen vorgegebenen ersten Außentemperaturgrenzwert (T1) unterschreitet, der Außentemperaturfaktor (AF) Eins (1) ist.

6. Verfahren nach einem der vorangegangenen Patentansprüche, **dadurch gekennzeichnet, dass** bei einer Außentemperatur (T), die einen vorgegebenen zweiten Außentemperaturgrenzwert (T2) überschreitet, der Außentemperaturfaktor (AF) Null (AF_0) ist oder einen negativen Wert annimmt.

7. Verfahren nach einem der vorangegangenen Patentansprüche, **dadurch gekennzeichnet, dass** bei einer Außentemperatur (T), die zwischen einem vorgegebenen ersten Außentemperaturgrenzwert (T1) und einem vorgegebenen zweiten Außentemperaturgrenzwert (T2) liegt, wobei der erste Außentemperaturgrenzwert (T1) kleiner als der zweite Außentemperaturgrenzwert (T2) ist, der Außentemperaturfaktor (AF) gemäß einer Rampe (r2) von einem ersten Außentemperaturfaktor (1) bis zu einem zweiten Außentemperaturfaktor (AF_0) verkleinert wird.

## Claims

1. A method for determining the desired ventilation air temperature of an automatic heating/air-conditioning system of a vehicle, preferably a convertible, wherein an opened or closed state of the top of the vehicle is detected and the heating/air-conditioning system is differently controlled and/or regulated depending on the state of the top, and wherein in the opened state of the top, the desired ventilation air temperature (TA) is determined depending on the vehicle speed (v), **characterised in that** in the opened state of the top, the desired ventilation air temperature (TA) is determined in such a way that a top-closed desired ventilation air temperature (TAg) is increased by a speed-dependent and outside temperature-dependent offset value (TAo), and wherein the speed-dependent and outside temperature-dependent offset value (TAo) is the product of a speed-dependent offset value (OS) and an outside temperature factor (AF).

2. A method according to claim 1, **characterised in that** in the opened state of the top and at a speed (v), which falls below a predetermined first speed limit value (v1), the speed-dependent offset value (OS) is zero (OS_0).

3. A method according to claim 1 or 2, **characterised in that** in the opened state of the top and at a speed (v), which is between a predetermined first speed limit value (v1) and a predetermined second speed limit value (v2), the predetermined first speed limit value (v1) being smaller than the predetermined second speed limit value (v2), the speed dependent offset value (OS) is increased in accordance with a ramp (r1) from zero (OS_0) to a maximum offset limit value (OSmax).

4. A method according to any one of claims 1 to 3, **characterised in that** in the opened state of the top and at a speed (v), which exceeds a predetermined second speed limit value (v2), the speed-dependent offset value (OS) is a rigidly predetermined offset limit value (OSmax).

5. A method according to any one of the preceding claims, **characterised in that** in the opened state of the top and at an outside temperature (T), which falls below a predetermined first outside temperature limit value (T1), the outside temperature factor (AF) is one (1).

6. A method according to any one of the preceding claims, **characterised in that** at an outside temperature (T), which exceeds a predetermined second outside temperature limit value (T2), the outside temperature factor (AF) is zero (AF_0) or adopts a negative value.

7. A method according to any one of the preceding claims, **characterised in that** at an outside temperature (T), which is between a predetermined first outside temperature limit value (T1) and a predetermined second outside temperature limit value (T2), the first outside temperature limit value (T1) being smaller than the second outside temperature limit value (T2), the outside temperature factor (AF) is reduced in accordance with a ramp (r2) from a first outside temperature factor (1) to a second outside temperature factor (AF_0).

## Revendications

1. Procédé pour déterminer la température de consigne de soufflage d'une installation automatique de climatisation-chauffage d'un véhicule, de préférence d'un cabriolet, procédé selon lequel,
on détecte l'état ouvert ou fermé de la capote du véhicule et on commande différemment l'installation de climatisation-chauffage suivant l'état de la capote et/ou on règle, et
si la capote est en position ouverte, on détermine la température de consigne de soufflage (TA) en fonction de la vitesse du véhicule (v), **caractérisé en ce qu'**
à l'état ouvert de la capote, on détermine la température de consigne de soufflage (TA) pour augmenter la température de consigne de soufflage (TAg), la capote étant fermée, en l'augmentant d'une valeur de décalage (TAo) dépendant de la vitesse et de la température extérieure, et
on forme la valeur de décalage (TAo) dépendant de la vitesse et de la température extérieure comme produit d'une valeur de décalage (OS) dépendant de la température et d'un coefficient de température extérieure (AF).

2. Procédé selon la revendication 1,
**caractérisé en ce que**
lorsque la capote est en position ouverte et pour une vitesse (v), en dessous d'une première valeur limite de vitesse (v1) prédéfinie, la valeur de décalage (OS) dépendant de la vitesse est nulle (OS_0).

3. Procédé selon la revendication 1 ou 2,
**caractérisé en ce que**
lorsque la capote est en position ouverte et pour une vitesse (v) comprise entre une première limite de vitesse (v1) prédéfinie et une seconde vitesse (v2), prédéfinie, la première limite prédéfinie (v1) de la vitesse étant inférieure à la seconde vitesse prédéfinie (v2), la valeur de décalage (OS) augmente en fonction de la vitesse selon une rampe (r1) allant de zéro (OS_0) jusqu'à une valeur de décalage maximale (OSmax).

4. Procédé selon l'une des revendications 1 à 3,
**caractérisé en ce que**
lorsque la capote est en position ouverte et pour une vitesse (v) qui dépasse une seconde valeur limite de vitesse prédéfinie (v2), la valeur de décalage (OS) dépendant de la vitesse, est une valeur limite de décalage (OSmax), prédéfinie de manière fixe.

5. Procédé selon l'une des revendications précédentes,
**caractérisé en ce que**
pour la capote en position ouverte et pour une température extérieure (T) qui passe en dessous d'une première valeur limite de température extérieure (T1), prédéfinie, le coefficient de température extérieure (AF) est égal à l'unité (1).

6. Procédé selon l'une des revendications précédentes,
**caractérisé en ce que**
pour une température extérieure (T) qui dépasse une seconde valeur limite de température extérieure (T2), prédéfinie, le coefficient de température extérieure (AF) est égal à zéro (AF_0) ou prend une valeur négative.

7. Procédé selon l'une des revendications précédentes,
**caractérisé en ce que**
pour une température extérieure (T) comprise entre une première valeur limite de température extérieure (T1) et une seconde valeur limite de température extérieure (T2), la première valeur limite de température extérieure (T1) étant inférieure à la seconde valeur limite de température extérieure (T2), le coefficient de température extérieure (AF) est réduit selon une rampe (r2) en partant d'un premier coefficient de température extérieure (1) jusqu'à un second coefficient de température extérieure (AF_0).
